(19) Europäisches Patentamt
European Patent Office
Office européen des brevets

(11) **EP 3 584 560 A1**

(12) **DEMANDE DE BREVET EUROPEEN**

(43) Date de publication:
**25.12.2019   Bulletin 2019/52**

(51) Int Cl.:
**G01N 15/14** *(2006.01)*        **G03H 1/04** *(2006.01)*

(21) Numéro de dépôt: **19181164.5**

(22) Date de dépôt: **19.06.2019**

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**
Etats d'extension désignés:
**BA ME**
Etats de validation désignés:
**KH MA MD TN**

(30) Priorité: **20.06.2018   FR 1855464**

(71) Demandeur: **Commissariat à l'Énergie Atomique
et aux Énergies Alternatives
75015 Paris cedex (FR)**

(72) Inventeurs:
• **CIONI, Olivier**
  **38054 Grenoble cedex 09 (FR)**
• **BORDY, Thomas**
  **38054 Grenoble cedex 09 (FR)**
• **DEFORCEVILLE, Camille**
  **38054 Grenoble cedex 09 (FR)**

(74) Mandataire: **GIE Innovation Competence Group
310, avenue Berthelot
69372 Lyon Cedex 08 (FR)**

(54) **PROCÉDÉ D'OBSERVATION D'UN ÉCHANTILLON PAR IMAGERIE SANS LENTILLE, AVEC PRISE EN COMPTE D'UNE DISPERSION SPATIALE DANS L'ÉCHANTILLON**

(57)    Procédé d'observation d'un échantillon (10) comportant les étapes suivantes :
a) illumination de l'échantillon à l'aide d'une source de lumière (11), la source de lumière émettant une onde lumineuse incidente (12) se propageant vers l'échantillon (10) selon un axe de propagation (Z) ;
b) acquisition, à l'aide d'un capteur d'image (16), d'une image ($I_0$) de l'échantillon (10), formée dans un plan de détection ($P_0$);
c) formation d'une pile d'images, dites images reconstruites, à partir de l'image acquise (/) lors de l'étape b), chaque image reconstruite étant obtenue par l'application d'un opérateur de propagation numérique *(h)*, selon une distance de reconstruction ($z_j$);
d) à partir de chaque image ($A_{z_j}$) de la pile d'images, calcul d'un indicateur de netteté ($C_j(x,y)$) pour différentes positions radiales ($x,y$), chaque indicateur de netteté étant associé à une position radiale ($x,y$) et à une distance de reconstruction ($z_j$).

**Fig. 2C**

**Description**

**DOMAINE TECHNIQUE**

Le domaine technique de l'invention est l'observation d'un échantillon, notamment un échantillon comportant des particules, par imagerie sans lentille, ou par imagerie dite défocalisée.

**ART ANTERIEUR**

L'imagerie sans lentille s'est développée ces dernières années, et ses applications pour la caractérisation d'échantillons se multiplient, par exemple dans le domaine du diagnostic médical, de la culture cellulaire, de l'analyse biologique ou dans le domaine de l'agroalimentaire. Cette technique permet en effet d'obtenir, à bas coût, une image d'un échantillon selon un champ d'observation élevé. L'application d'algorithmes de reconstruction holographiques à des images obtenues selon une configuration sans lentille permet d'obtenir des images exploitables d'échantillons, ce qui constitue une alternative à bas coût à la microscopie conventionnelle, tout en bénéficiant d'un champ d'observation étendu.

Différents documents décrivent l'utilisation de l'imagerie sans lentille pour l'observation d'échantillons. Par exemple, le document WO2016189257 décrit l'application de l'imagerie sans lentille, couplée à des algorithmes de reconstruction holographique, à l'observation de lames de tissus à des fins de diagnostic. Les documents WO2016151248 ou WO2017178723 décrivent le recours à l'imagerie sans lentille pour caractériser des cellules dans un échantillon. La technique décrite dans ces documents est basée sur l'acquisition d'une image à l'aide d'un capteur d'image placé face à un échantillon. L'application d'un algorithme de reconstruction holographique permet de former des profils représentatifs de l'onde lumineuse à laquelle est exposé le capteur d'image. A partir des profils, on caractérise les cellules placées dans l'échantillon. Le recours à des profils permet d'être peu sensible à la position d'une cellule à caractériser dans l'échantillon, et en particulier à la distance entre la cellule et l'échantillon.

La publication Xiao Yu et al "Review of digital holographic microscopy for three-dimensional profiling and tracking", Optical Enginerering, vol. 53, n° 11, décrit une formation d'une pile d'images à partir d'un hologramme. Chaque image est définie selon des positions radiales. A chaque position radiale, on recherche, dans la pile d'images, une image dite focalisée, maximisant une intensité selon une direction longitudinale, orthogonale au plan de chaque image. On forme ensuite une image comportant les pixels de chaque image focalisée respectivement déterminée à chaque position radiale. Ainsi, pour chaque position radiale, la recherche de l'image focalisée est effectuée en analysant une distribution de l'intensité transversalement aux images de la pile d'image.

Le document EP3252455 décrit également une acquisition d'une image holographique de particules, et la formation d'une pile d'images. Pour différentes positions radiales, on recherche, parmi les images de la pile d'images, une image correspondant à une distance correspondant à une focalisation optimale.

Une difficulté associée à l'application d'algorithmes de reconstruction holographique est qu'il est nécessaire de connaître la distance entre le capteur d'image et l'échantillon. Cependant, lorsque l'échantillon comporte des particules, la position de ces dernières, par rapport au capteur d'image, peut varier dans l'épaisseur de l'échantillon. Ainsi, les images obtenues par reconstruction holographique peuvent être nettes pour certaines particules, mais floues pour d'autres particules. L'invention permet de surmonter cette difficulté, en permettant une formation d'une image sur laquelle différentes particules, situées à différentes distances du capteur d'image, apparaissent nettes, sans nécessiter une multiplication d'acquisitions d'images. Ainsi, l'invention permet d'augmenter la profondeur de champ de l'imagerie sans lentille.

**EXPOSE DE L'INVENTION**

Un premier objet de l'invention est un procédé d'observation d'un échantillon comportant les étapes suivantes :

a) illumination de l'échantillon à l'aide d'une source de lumière, la source de lumière émettant une onde lumineuse incidente se propageant vers l'échantillon selon un axe de propagation;

b) acquisition, à l'aide d'un capteur d'image, d'une image de l'échantillon, formée dans un plan de détection, l'échantillon étant disposé entre la source de lumière et le capteur d'image, chaque image étant représentative d'une onde lumineuse d'exposition, à laquelle est exposé le capteur d'image sous l'effet de l'illumination, l'image comportant des pixels, chaque pixel correspondant à une position radiale définie dans un plan parallèle au plan de détection ;

c) formation d'une pile d'images complexes, dites images reconstruites, à partir de l'image acquise lors de l'étape b), chaque image reconstruite étant obtenue par l'application d'un opérateur de propagation numérique, selon une distance de reconstruction, le long de l'axe de propagation, la pile d'images comportant autant d'images reconstruites que de distances de reconstruction différentes, chaque image reconstruite étant représentative d'une onde lumineuse d'exposition à laquelle est exposé le capteur d'image ;
d) à partir de chaque image de la pile d'images, calcul d'un indicateur de netteté pour différentes positions radiales, chaque indicateur de netteté étant associé à une position radiale et à une distance de reconstruction ;

le procédé étant caractérisé en ce qu'il comporte également les étapes suivantes :

e) prise en compte d'un critère de sélection ;
f) pour chaque position radiale, et en fonction du critère de sélection, sélection d'un indicateur de netteté, parmi les différents indicateurs de netteté définis, à la position radiale, à partir des différentes images reconstruites, l'indicateur de netteté sélectionné étant associé à une image reconstruite optimale pour la position radiale considérée;
g) formation d'une image d'observation de l'échantillon, dont chaque pixel est associé à une position radiale, la valeur de pixels de l'image d'observation, voire de chaque pixel de l'image d'observation, étant déterminée en fonction de la valeur, à la position radiale du pixel, de l'image reconstruite optimale.

Le procédé peut comprendre, suite à l'étape f), une détermination, pour chaque position radiale considérée, d'une distance optimale, correspondant à la distance de reconstruction de l'image reconstruite optimale associée à la position radiale.

Selon un mode de réalisation, chaque indicateur de netteté est calculé à partir d'une image élémentaire, l'image élémentaire étant établie à partir du module et/ou de l'argument et/ou de la partie réelle et/ou de la partie imaginaire d'une image reconstruite. Une image élémentaire correspond à une image formée de valeurs scalaires, obtenue à partir d'une image reconstruite. L'étape d) peut comporter, pour chaque position radiale considérée, un calcul d'un gradient de l'image élémentaire, en la position radiale, selon une direction de gradient.

Selon un mode de réalisation, l'étape d) comporte, pour chaque image reconstruite de la pile d'images:

-   un calcul d'une image de gradient, représentative d'un gradient de l'image reconstruite selon au moins une direction de gradient;
-   un calcul d'une norme de l'image de gradient ;

de telle sorte que l'indicateur de netteté, en chaque position radiale, est obtenu à partir de la norme de l'image de gradient à la position radiale.

L'étape f) peut comporter une prise en compte d'une plage de validité, et un rejet d'un indicateur de netteté sélectionné si la distance de reconstruction qui lui est associée n'est pas comprise dans la plage de validité.

Lors de l'étape g), l'image d'observation, à chaque position radiale, peut être obtenue à partir de l'image reconstruite optimale pour la position radiale considérée.

Selon un mode de réalisation, aucune optique de formation d'image n'est disposée entre l'échantillon et le capteur d'image. Selon un autre mode de réalisation, un système optique est disposé entre l'échantillon et le capteur d'image, le système optique conjuguant un plan image à un plan objet, le plan de détection étant distant du plan image, ou l'échantillon étant distant du plan objet, le plan de détection étant décalé par rapport au plan image,et/ou l'échantillon étant décalé du plan objet, de telle sorte que l'image acquise par le capteur d'image est une image défocalisée de l'échantillon.

L'échantillon peut être maintenu dans ou sur un élément de maintien, l'échantillon étant immobile par rapport à l'élément de maintien.

L'échantillon peut comporter des particules. Le procédé peut alors comporter une étape h) de caractérisation des particules à partir de l'image d'observation de l'échantillon, la caractérisation comprenant:

-   un comptage des particules ;
-   et/ou une détermination d'une taille et/ou d'une forme des particules ;
-   et/ou un comptage de particules en fonction de leur taille et/ou de leur forme ;
-   et/ou une détermination d'une position tridimensionnelle des particules.

Les particules peuvent être immobiles par rapport à l'élément de maintien.

Un deuxième objet de l'invention est un dispositif pour l'identification d'un échantillon, comportant :

-   une source de lumière configurée pour émettre une onde lumineuse incidente se propageant vers l'échantillon;
-   un capteur d'image ;
-   un support, configuré pour maintenir l'échantillon entre la source de lumière et le capteur d'image;

un processeur, configuré pour recevoir une image de l'échantillon acquise par le capteur d'image et pour mettre en oeuvre les étapes c) à g) d'un procédé selon le premier objet de l'invention.

Selon un mode de réalisation, aucune optique de formation d'image n'est disposée entre l'échantillon et le capteur d'image.

Selon un mode de réalisation, le dispositif comporte un système optique définissant une configuration de mise au point, selon laquelle le capteur d'image est conjugué d'un plan passant par l'échantillon, le dispositif étant tel que le capteur d'image ou l'échantillon sont décalés par rapport à la configuration de mise au point, de telle sorte que lors de l'étape b), le capteur d'image acquiert une image défocalisée de l'échantillon.

D'autres avantages et caractéristiques ressortiront plus clairement de la description qui va suivre de modes particuliers de réalisation de l'invention, donnés à titre d'exemples non limitatifs, et représentés sur les figures listées ci-dessous.

## FIGURES

La figure 1A représente un exemple de dispositif selon l'invention. La figure 1B représente une source de lumière dans un mode de réalisation de l'invention.

La figure 2A représente une image d'un échantillon acquise par un capteur d'image.

La figure 2B montre une image reconstruite selon l'art antérieur, en considérant une distance de reconstruction "moyenne".

La figure 2C montre une image désignée par le terme "image d'observation", obtenue en mettant en oeuvre l'invention.

La figure 2D représente des images, dites images élémentaires, obtenues sur la base d'images complexes reconstruites à différentes distances de reconstruction. Les images élémentaires formant une pile d'images élémentaires de l'échantillon.

La figure 3 illustre les principales étapes d'un procédé selon l'invention.

Les figures 4A et 4B sont des images d'un même échantillon obtenues à l'aide d'un microscope, respectivement selon deux plans focaux différents.

Les figures 4C et 4D sont des images de l'échantillon représenté sur les figures 4A et 4B, ces images étant obtenues par imagerie sans lentille respectivement selon l'art antérieur et en mettant en oeuvre l'invention.

Les figures 5A et 5B sont des images d'un échantillon obtenues par imagerie sans lentille respectivement selon l'art antérieur et en mettant en oeuvre l'invention.

La figure 6 est un autre exemple de dispositif convenant à une mise en oeuvre de l'invention.

## EXPOSE DE MODES DE REALISATION PARTICULIERS

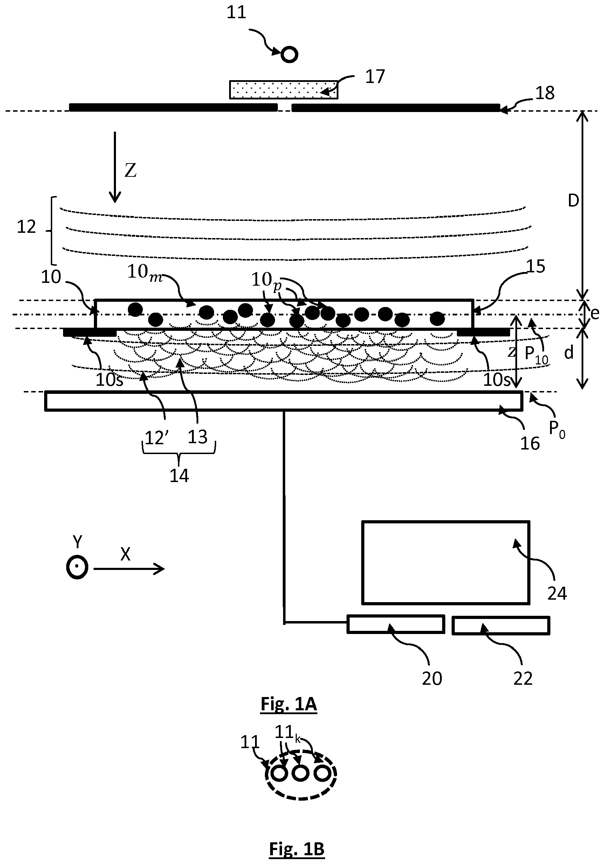

La figure 1A représente un exemple de dispositif selon l'invention. Une source de lumière 11 est configurée pour émettre une onde lumineuse 12, dite onde lumineuse incidente, se propageant en direction d'un échantillon 10, selon un axe de propagation Z. L'onde lumineuse 12 est émise selon une bande spectrale d'illumination $\Delta\lambda$.

L'échantillon 10 est un échantillon que l'on souhaite caractériser. L'échantillon comporte un milieu 10m, par exemple un milieu liquide, dans lequel baignent des particules 10p. Les particules peuvent être des cellules, ou des microorganismes, ou des microalgues, ou leur fragment. Par microorganisme, on entend notamment une levure, une bactérie, une spore, un champignon. Le terme particules peut également désigner particules solides, en particulier des microbilles, par exemple des microbilles métalliques, des microbilles de verre ou des microbilles organiques, couramment mises en oeuvre dans des protocoles biologiques. Il peut également s'agir de gouttelettes insolubles baignant dans un milieu liquide, par exemple des gouttelettes lipidiques dans une émulsion de type huile dans eau. Les particules peuvent avoir un diamètre ou une diagonale inférieure à 100 $\mu$m. Elles peuvent être inscrites dans un cercle ou une sphère dont le diamètre est inférieur à 100 $\mu$m.

Le milieu 10m peut être un milieu solide ou un milieu formant un gel. Le milieu 10m peut comporter un liquide corporel, par exemple, et à de façon non limitative, du sang, de l'urine, de la lymphe ou du liquide céphalo-rachidien. Il peut s'agir d'un milieu de culture, propice au développement de cellules ou de microorganismes.

L'échantillon 10 est maintenu par un élément de maintien 15. L'élément de maintien a pour fonction de maintenir l'échantillon face au capteur d'image 16. Il est de préférence transparent ou translucide. L'élément de maintien peut être une lame transparente, par exemple une lame de verre, ou une chambre fluidique. Dans l'exemple représenté sur la figure 1A, l'élément de maintien 15 est une chambre fluidique de type Gene Frame® d'épaisseur e=250 $\mu$m. L'épaisseur e de l'échantillon 10, selon l'axe de propagation Z, varie typiquement entre 10 $\mu$m et 1 cm, et est de préférence comprise entre 20 $\mu$m et 1 mm. L'échantillon 10 est maintenu sur un support 10s à une distance d d'un capteur d'image 16.

La distance D entre la source de lumière 11 et la chambre fluidique 15 est de préférence supérieure à 1 cm.

Elle est de préférence comprise entre 2 et 30 cm. Avantageusement, la source de lumière, vue par l'échantillon, est considérée comme ponctuelle. Cela signifie que son diamètre (ou sa diagonale) est préférentiellement inférieur au dixième, mieux au centième de la distance entre la chambre fluidique 15 et la source de lumière. Sur la figure 1, la source de lumière est une diode électroluminescente. Elle est généralement associée à diaphragme 18, ou filtre spatial. L'ouverture du diaphragme est typiquement comprise entre 5 $\mu$m et 1 mm, de préférence entre 50 $\mu$m et 500 $\mu$m. Dans cet exemple, le diaphragme est fourni par Thorlabs sous la référence P150S et son diamètre est de 150 $\mu$m. Le diaphragme peut être remplacé par une fibre optique, dont une première extrémité est placée face à la source de lumière 11 et dont une deuxième extrémité est placée en regard de l'échantillon 10. Le dispositif représenté sur la figure 1 comporte également un diffuseur 17, disposé entre la source de lumière 11 et le diaphragme 18. L'usage d'un tel diffuseur permet de s'affranchir de contraintes de centrage de la source de lumière 11 par rapport à l'ouverture du diaphragme 18. La fonction d'un tel diffuseur est de répartir le faisceau lumineux, produit par une source de lumière élémentaire 11 selon un cône d'angle a. De préférence, l'angle de diffusion a varie entre 10° et 80°. Alternativement, la source de lumière peut être une source laser, telle une diode laser. Dans ce cas, il n'est pas recommandé de lui associer un filtre spatial ou un diffuseur, comme décrit dans le document US2017317125.

De préférence, la bande spectrale d'émission $\Delta\lambda$ de l'onde lumineuse incidente 12 a une largeur de bande inférieure à 100 nm. Par largeur de bande spectrale, on entend une largeur à mi-hauteur de ladite bande spectrale.

Selon un mode de réalisation, la source de lumière 11 comporte plusieurs sources de lumière élémentaires $11_k$, chacune étant configurée pour émettre une onde lumineuse incidente $12_k$ dans une bande spectrale $\Delta\lambda_k$. Une telle source de lumière est représentée sur la figure 1B. De préférence, les bandes spectrales $\Delta\lambda_k$ des différentes sources de lumière $11_k$ sont différentes les unes des autres. Une telle configuration est décrite dans le document WO2016189257.

L'échantillon 10 est disposé entre la source de lumière 11 et un capteur d'image 16. Le capteur d'image 16 est configuré pour former une image $I_0$ de l'échantillon 10 selon un plan de détection $P_0$. Dans l'exemple représenté, il s'agit d'un capteur d'image comportant une matrice de pixels, de type CCD ou un CMOS. La matrice de pixel forme le plan de détection $P_0$. Le plan de détection $P_0$ s'étend de préférence perpendiculairement à l'axe de propagation Z de l'onde lumineuse incidente 12. Le plan de détection s'étend selon un plan radial XY, défini par deux axes X et Y, le plan radial étant perpendiculaire à l'axe de propagation Z.

La distance $d$ entre l'échantillon 10 et la matrice de pixels du capteur d'image 16 est préférentiellement comprise entre 50 $\mu$m et 2 cm, de préférence comprise entre 100 $\mu$m et 2 mm.

On remarque, dans ce mode de réalisation, l'absence d'optique de grossissement ou de formation d'image entre le capteur d'image 16 et l'échantillon 10. Cela n'empêche pas la présence éventuelle de microlentilles de focalisation au niveau de chaque pixel du capteur d'image 16, ces dernières n'ayant pas de fonction de grandissement de l'image acquise par le capteur d'image, leur fonction étant d'optimiser l'efficacité de collecte de la lumière par les pixels.

Sous l'effet de l'onde lumineuse incidente 12, les particules présentes dans l'échantillon peuvent engendrer une onde diffractée 13, susceptible de produire, au niveau du plan de détection $P_0$, des interférences, en particulier avec une partie de l'onde lumineuse incidente 12' transmise par l'échantillon. Par ailleurs, l'échantillon peut absorber une partie de l'onde lumineuse incidente 12. Ainsi, l'onde lumineuse 14, transmise par l'échantillon, et à laquelle est exposé le capteur d'image 16, désignée par le terme "onde d'exposition", peut comprendre :

- une composante 13 résultant de la diffraction de l'onde lumineuse incidente 12 par chaque particule de l'échantillon ;
- une composante 12' résultant de la transmission de l'onde lumineuse incidente 12 par l'échantillon, une partie de cette dernière pouvant être absorbée dans l'échantillon.

Ces composantes forment des interférences dans le plan de détection. Aussi, l'image acquise par le capteur d'image comporte des figures d'interférences (ou figures de diffraction), dues aux différentes particules de l'échantillon.

Un processeur 20, par exemple un microprocesseur, est configuré pour traiter chaque image $I_0$ acquise par le capteur d'image 16, selon les étapes décrites ci-après. En particulier, le processeur est un microprocesseur relié à une mémoire programmable 22 dans laquelle est stockée une séquence d'instructions pour effectuer les opérations de traitement d'images et de calculs décrites dans cette description. Le processeur peut être couplé à un écran 24 permettant l'affichage d'images acquises par le capteur d'image 16 ou calculées par le processeur 20.

Du fait de l'absence d'optique de formation d'image, une image $I_0$ acquise par le capteur d'image 16, également appelée hologramme, ne permet pas d'obtenir une représentation suffisamment précise de l'échantillon observé. L'image acquise $I_0$ peut notamment comporter un grand nombre de figures d'interférence, et peut ne pas être aisément exploitable pour identifier les particules présentes dans l'échantillon.

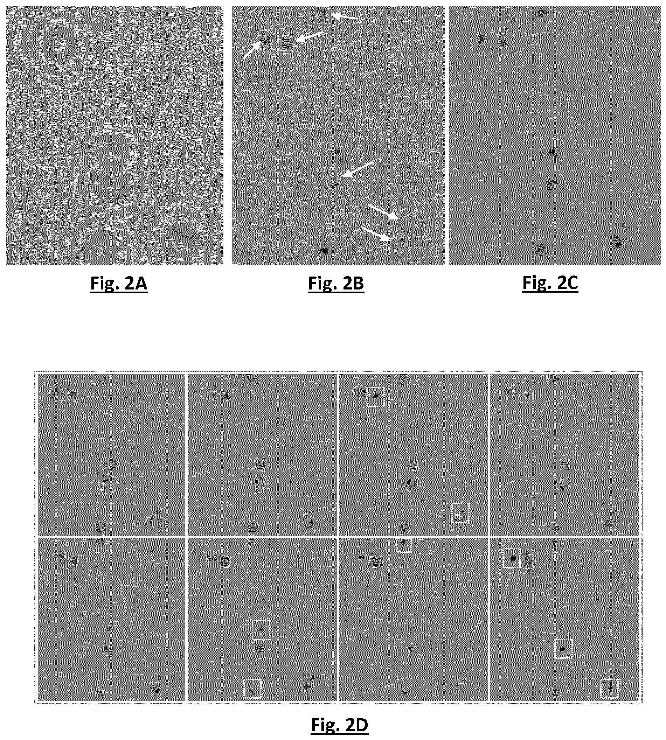

La figure 2A montre une telle image, l'échantillon étant formé de billes de polystyrène de diamètre 5 $\mu$m baignant dans de l'eau. La figure 2A a été obtenue en disposant un échantillon 10 à une distance de 700 $\mu$m d'un capteur d'image 16 de type Capteur CMOS monochrome 8 bits comportant 3884 x 2764 pixels, chaque pixel mesurant 1.67 $\mu$m de côté. La source de lumière était une diode électroluminescente de type Cree MC-E Color, comportant trois diodes électroluminescentes pouvant être simultanément ou successivement activées, chaque diode émettant respectivement dans les

bandes spectrales $\Delta\lambda$ suivantes : 450nm - 465 nm ; 520nm - 535 nm ; 620nm - 630 nm. Seule la bande spectrale 450 nm -465 nm a été mise en oeuvre. La source de lumière était disposée à une distance de 5 cm de l'échantillon.

On peut appliquer, à l'image $I_0$ acquise par le capteur d'image, un opérateur de propagation holographique $h$, de façon à calculer une grandeur représentative de l'onde lumineuse d'exposition 14. Il est alors possible de reconstruire une expression complexe $A$ de l'onde lumineuse 14 en tout point de coordonnées $(x,y,z)$ de l'espace, et en particulier dans un plan de reconstruction $P_z$ situé à une distance $|z|$ du capteur d'image 16, dite distance de reconstruction, ce plan de reconstruction étant par exemple le plan $P_{10}$ selon lequel s'étend l'échantillon, avec :

$A(x,y,z) = I_0(x,y,z) * h$ (1) * désignant l'opérateur produit de convolution.

L'opérateur de propagation $h$ a pour fonction de décrire la propagation de la lumière entre le capteur d'image 16 et un point de coordonnées $(x,y,z)$, situé à une distance $|z|$ du capteur d'image. Il est alors possible de déterminer le module $M(x,y,z)$ et/ou la phase $\varphi(x,y,z)$ l'onde lumineuse 14, à la distance $|z|$, avec :

- $M(x,y,z) = abs[A(x,y,z)]$ ;
- $\varphi(x,y,z) = arg[A(x,y,z)]$.

Les opérateurs *abs* et *arg* désignent respectivement le module et l'argument.

L'opérateur de propagation est par exemple la fonction de Fresnel-Helmholtz, telle que :

$$h(x,y,z) = \frac{1}{j\lambda z} e^{i2\pi\frac{z}{\lambda}} \exp\left(i\pi \frac{x^2+y^2}{\lambda z}\right) \text{ avec } i^2 = -1.$$

Autrement dit, l'expression complexe A de l'onde lumineuse 14, en tout point de coordonnées $(x,y,z)$ de l'espace, est telle que : $A(x,y,z) = M(x,y,z)e^{i\varphi(x,y,z)}$

Dans la suite de cette description, les coordonnées $(x,y)$ désignent une position radiale dans un plan radial XY parallèle au plan de détection. La coordonnée z désigne une coordonnée selon l'axe de propagation Z.

L'expression complexe $A$ est une grandeur complexe dont l'argument et le module sont respectivement représentatifs de la phase et de l'intensité de l'onde lumineuse 14 d'exposition détectée par le capteur d'image 16. Le produit de convolution de l'image $I_0$ par l'opérateur de propagation $h$ permet d'obtenir une image complexe $A_z$ représentant une distribution spatiale de l'expression complexe A dans un plan de reconstruction $P_z$, s'étendant à une distance $|z|$ du plan de détection $P_0$. Dans cet exemple, le plan de détection $P_0$ a pour équation $z = 0$. L'image complexe $A_z$ correspond à une image complexe de l'échantillon dans le plan de reconstruction $P_z$. L'image $A_z$ est définie à des coordonnées radiales $(x,y)$, de telle sorte que $A_z(x,y) = A(x,y,z)$. L'image $A_z$ représente également une distribution spatiale bidimensionnelle de l'expression complexe de l'onde d'exposition 14. Un tel procédé, désigné par le terme reconstruction holographique, permet notamment de reconstruire une image du module ou de la phase de l'onde lumineuse d'exposition 14 dans le plan de reconstruction. Pour cela, on peut former des images $M_z$ et $\varphi_z$ représentant respectivement le module ou la phase de l'image complexe $A_z$, avec $M_z = \text{mod}(A_z)$ et $\varphi_z = \text{arg}(A_z)$.

L'application d'un opérateur de reconstruction holographique à une image acquise, selon l'expression (1), peut s'accompagner de la formation d'un bruit affectant les images reconstruites. Afin de limiter l'apparition de ce bruit, l'application de l'opérateur de reconstruction holographique est effectuée selon des algorithmes itératifs de reconstruction holographique. De tels algorithmes sont par exemple décrits :

- dans le document WO2016189257, en particulier dans les étapes 100 à 150 décrites dans ce dernier ;
- ou dans le document WO2017162985, et plus précisément selon les étapes 110 à 160 décrites dans ce dernier.

L'image représentée sur la figure 2B a été obtenue en appliquant un algorithme de reconstruction holographique, tel que décrit dans WO2017162985, à l'image représentée sur la figure 2A. La figure 2B montre une image du module $M_z$ d'une image complexe reconstruite $A_z$, la distance de reconstruction z correspondant à une distance entre un plan médian de l'échantillon $P_{10}$ et le capteur d'image 16. Le plan médian de l'échantillon $P_{10}$ s'étend parallèlement au plan de détection, selon la mi-épaisseur de l'échantillon. Une telle image permet une observation acceptable de l'échantillon. Cependant, certaines particules, désignées par une flèche, apparaissent sous la forme d'anneaux concentriques. De telles particules sont situées à une distance du capteur d'image différente de la distance de reconstruction considérée. Elles sont éloignées du plan médian $P_{10}$. De ce fait, elles n'apparaissent pas nettement sur l'image reconstruite dans le plan médian. Ainsi, les images obtenues à partir du module ou de la phase de l'onde lumineuse d'exposition 14 permettent une observation acceptable de l'échantillon 10, et en particulier des particules $10_p$ situées à une distance du capteur d'image 16 correspondant à la distance de reconstruction. Cependant, les particules situées à une distance du capteur d'image 16 supérieure ou inférieure à la distance de reconstruction n'apparaissent pas de façon nette sur ces images.

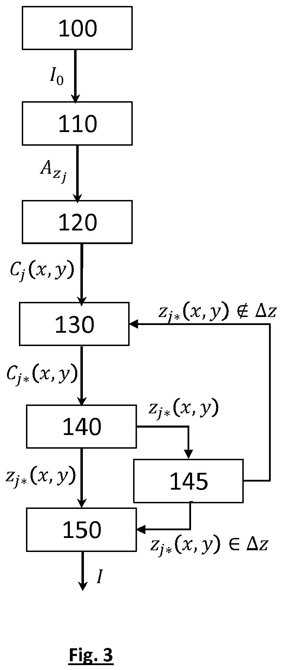

Les inventeurs ont mis au point un procédé permettant de remédier à cela, dont les principales étapes sont décrites ci-après, en lien avec la figure 3.

Etape 100 : Acquisition d'une image $I_0$ de l'échantillon 10 par le capteur d'image 16, cette image formant un hologramme. Un des intérêts de la configuration sans lentille, représentée sur la figure 1A, est le large champ observé, permettant d'adresser simultanément un volume d'échantillon élevé. Le champ observé dépend de la taille du capteur d'image, en étant légèrement inférieur à la surface de détection de ce dernier, du fait de l'espacement entre les pixels du capteur et l'échantillon. Le champ observé est généralement supérieur à 10 mm$^2$, et est typiquement compris entre 10 mm$^2$ et 50 mm$^2$, ce qui est significativement plus élevé qu'avec un microscope conventionnel.

Etape 110 : Obtention d'une pile d'images reconstruites.

Cette étape comporte une reconstruction de plusieurs images complexes en effectuant des reconstructions holographiques à différentes distances de reconstruction $z_j$ du plan de détection $P_0$. On obtient alors une pile d'images complexes $A_{z_j}$. Chaque image complexe $A_{z_j}$ de la pile d'images est reconstruite à une distance de reconstruction $z_j$, de telle sorte que $z_{j=1} \leq z_j \leq z_{j=J}$, avec :

- $z_{j=1}$ représentant une distance minimale du capteur d'image, selon l'axe Z, à laquelle une image complexe $A_{z_{j=1}}$ est reconstruite ;
- $z_{j=J}$ représentant une distance maximale du capteur d'image, selon l'axe Z, à laquelle une image complexe $A_{z_{j=J}}$ est reconstruite.

Chaque indice $j$ est un entier naturel indexant une distance de reconstruction, avec $1 \leq j \leq J$, $J$ étant le nombre d'images complexes $A_{z_j}$ dans la pile d'images.

De préférence, les distances de reconstruction $z_j$ encadrent l'échantillon 10. Si l'échantillon s'étend, selon l'axe de propagation Z, entre deux distances $z_{min}$ et $z_{max}$, par rapport au capteur d'image 16, avec $z_{min} < z_{max}$, les distances de reconstruction minimale $z_{j=1}$ et maximale $z_{j=J}$ sont telles que $z_{j=1} \leq z_{min} < z_{max} \leq z_{j=J}$.

Les distances de reconstruction respectives $z_j$, $z_{j+1}$ de deux images reconstruites $A_{z_j}$, $A_{z_{j+1}}$ adjacentes peuvent être écartées d'une distance comprise entre 5 $\mu$m et 100 $\mu$m, cette distance correspondant à un pas de reconstruction.

Chaque image complexe $A_{z_j}$ de la pile d'images peut être obtenue à partir de l'image $I_0$ acquise lors de l'étape 100, selon les différentes distances de reconstruction $z_{j=1}...z_j....z_{j=J}$. De préférence, chaque image complexe $A_{z_j}$ est reconstruite en appliquant un algorithme de reconstruction limitant le bruit de reconstruction, comme précédemment décrit. On peut par exemple utiliser un algorithme décrit dans WO2017162985. Par "à partir de", on entend à partir de l'image acquise $I_0$ elle-même ou d'une image obtenue par traitement de l'image acquise $I_0$, par exemple une normalisation ou une prise en compte de la racine carrée de l'image.

La pile d'images complexes peut être établie selon la méthode décrite dans WO2017178723.

A l'issue de l'étape 110, on dispose d'une pile d'images complexes $A_{z_j}$, chaque image complexe étant représentative de l'onde lumineuse d'exposition 14, dans un plan de reconstruction situé à une distance $z_j$ du plan de détection $P_0$. Chaque image complexe $A_{z_j}$ est définie selon des coordonnées radiales $(x,y)$, dans un plan parallèle au plan de détection $P_0$.

La figure 2D représente quelques images, dites images élémentaires, obtenues à partir d'une pile d'images complexes reconstruites, à différentes distances de reconstruction, à partir de l'image de la figure 2A. Le pas de reconstruction est de 10 $\mu$m.

Etape 120 : Calcul d'un indicateur de netteté pour différentes positions radiales $(x,y)$, le long de l'axe de propagation Z.

Au cours de cette étape, on détermine une évolution d'un indicateur de netteté $C_j(x,y)$ le long de l'axe de propagation Z, et cela pour plusieurs positions radiales $(x,y)$. En d'autres termes, pour chaque position radiale $(x,y)$, cette étape comporte un calcul d'un indicateur de netteté $C_j(x,y)$, à la position radiale considérée, de chaque image $A_{z_j}$ de la pile d'images. On obtient ainsi une évolution de l'indicateur de netteté $Cj(x,y)$ en fonction de la distance de reconstruction $z_j$.

Chaque image reconstruite $A_{z_j}$ est une image complexe. L'indicateur de netteté $Cj(x,y)$ de chaque image $A_{z_j}$ de la pile d'images, en une coordonnée radiale $(x,y)$, peut être calculé en considérant une image, dite image élémentaire $I_{z_j}$, obtenue à partir de l'image complexe. L'image élémentaire peut être :

- une image du module $M_{z_j}$ de chaque image complexe $A_{z_j}$, avec $I_{z_j}(x,y) = M_{z_j}(x,y) = mod(A_{z_j}(x,y))$ ;
- une image de la phase $\varphi_{z_j}$ de chaque image complexe $A_{z_j}$, avec $I_{z_j}(x,y) = \varphi_{z_j}(x,y) = arg(A_{z_j}(x,y))$ ;
- une image de la partie réelle $Re_{z_j}$ de chaque image complexe $A_{z_j}$, avec $Re_{z_j}(x,y) = Re(A_{z_j}(x,y))$, $Re$ désignant l'opérateur "partie réelle";
- une image de la partie imaginaire $Im_{z_j}$ de chaque image complexe $A_{z_j}$, avec $Re_{z_j}(x,y) = Im(A_{z_j}(x,y))$, $Im$ désignant l'opérateur "partie imaginaire".

D'une façon générale, une image élémentaire $I_{z_j}$ est une image formée de grandeurs scalaires obtenues à partir d'une image complexe reconstruite $A_{z_j}$. Une image élémentaire permet une visualisation de l'image complexe à partir de laquelle elle a été obtenue. Une image élémentaire peut notamment être établie à partir du module et/ou de la phase et/ou de la partie réelle et/ou de la partie imaginaire d'une image complexe reconstruite $A_{z_j}$.

L'indicateur de netteté $C_j(x,y)$ de chaque image complexe $A_{z_j}$ peut être établi à partir de l'image élémentaire $I_{z_j}$. Par exemple, l'image élémentaire $I_{z_j}$ est une image $M_{z_j}$ du module de l'image complexe. L'indicateur de netteté peut alors être établi en considérant un gradient de l'image élémentaire selon une ou plusieurs directions, et par exemple selon les deux axes orthogonaux X et Y définissant le plan radial XY. Dans cet exemple, l'indicateur de netteté $C_j(x,y)$ est obtenu en :

- calculant un gradient de l'image, selon l'axe X, du module $M_{z_j}$ en chaque position radiale $(x,y)$, de façon à obtenir une image de gradient selon l'axe X, notée $G_X(I_{z_j}(x,y))$, avec, dans cet exemple, $G_X(I_{z_j}(x,y)) = G_X(M_{z_j}(x,y))$. L'image de gradient peut être obtenue en appliquant un filtre de Sobel à l'image $I_{z_j}$.
- Calculant un gradient de l'image, selon l'axe Y, du module $M_{z_j}$ en chaque position radiale $(x,y)$, par exemple en appliquant un filtre de Sobel, de façon à obtenir une image de gradient selon l'axe Y, notée $G_Y(I_{z_j}(x,y))$, avec, dans cet exemple, $G_Y(I_{z_j}(x,y)) = G_Y(M_{z_j}(x,y))$.
- Combinant les images de gradient ainsi calculées, de façon à former une image de gradient bidimensionnel $G_{XY}$. L'image de gradient bidimensionnel $G_{XY}$ peut être obtenue en calculant une norme, de telle sorte que :

$$G_{XY}(x,y) = \left| G_X(M_{z_j}(x,y)) \right| + \left| G_Y(M_{z_j}(x,y)) \right| \text{ (norme d'ordre 1)}$$

ou

$$G_{XY}(x,y) = \left| G_X(M_{z_j}(x,y)) \right|^2 + \left| G_Y(M_{z_j}(x,y)) \right|^2 \text{(norme d'ordre 2)}$$

L'image de gradient bidimensionnelle forme, en chaque position radiale $(x,y)$, alors un indicateur de netteté $C_j(x,y)$ de l'image complexe $A_{z_j}$, de telle sorte que $C_j(x,y) = G_{XY}(x,y)$. Ainsi, chaque indicateur de netteté est déterminé en considérant les pixels, de la même image, qui lui sont adjacents. Cela est particulièrement adapté à des échantillons présentant des objets contrastés, par exemple des particules contrastées.

L'image de gradient bidimensionnel ainsi obtenue est représentative d'un gradient bidimensionnel de l'image complexe reconstruite $A_{z_j}$. Bien que décrite en lien avec une image du module de l'image complexe, l'indicateur de netteté peut être obtenu avec une autre composante de l'image complexe, par exemple une image de phase de l'image complexe reconstruite $A_{z_j}$, ou de sa partie réelle, ou de sa partie imaginaire.

L'indicateur de netteté peut être établi, à chaque distance de reconstruction et à chaque position radiale, à partir d'une image élémentaire comportant le module, et/ou la phase, et/ou la partie réelle, et/ou la partie imaginaire des images complexes reconstruites, en considérant l'intensité de ces images. L'indicateur de netteté peut être établi à partir de l'intensité de telles images.

Suite à l'étape 120, on dispose d'un indicateur netteté $C_j(x,y)$ pour chaque position radiale $(x,y)$, correspondant à un pixel de l'image complexe $A_{z_j}$, et cela pour chaque distance de reconstruction $z_j$.

Etape 130 : sélection d'un indicateur de netteté optimal $C_j(x,y)$ pour chaque position radiale $(x,y)$.

Au cours de cette étape, on sélectionne, pour chaque position radiale $(x,y)$, parmi les indicateurs de netteté $C_j(x,y)$ ($1 \leq j \leq J$) correspondant à la position radiale, un indicateur de netteté optimal $C_{j*}(x,y)$ satisfaisant à un critère de sélection prédéterminé. L'indicateur de netteté optimal $C_{j*}(x,y)$ ainsi sélectionné peut être l'indicateur de netteté maximal, auquel cas $C_{j*}(x,y) = \max_j C_j(x,y).$ Il peut également s'agir de l'indicateur de netteté minimal, auquel cas $C_{j*}(x,y) = \min_j C_j(x,y).$

Sur la pile d'images élémentaires illustrées sur la figure 2D, on a encadré, dans certaines images élémentaires, des positions radiales dans lesquelles l'indicateur de netteté est optimal. Les positions radiales encadrées correspondent à des particules.

Etape 140 : Détermination d'une distance de reconstruction optimale $z_{j*}$ pour chaque position radiale $(x,y)$ considérée.

La sélection de l'indicateur de netteté optimal $C_{j*}(x,y)$ permet d'établir, pour chaque position radiale, une distance de reconstruction, dite optimale $z_{j*}(x,y)$, associée à l'indicateur de netteté optimal. A cette distance de reconstruction optimale $z_{j*}(x,y)$, pour la position radiale $(x,y)$ considérée, l'image complexe $A_{z_{j*}}$ est considérée comme étant nette.

Ainsi, si on considère qu'une image $A_{z_{j'}}$ à une position radiale $(x,y)$, est nette lorsque l'indicateur de netteté est maximal, on obtient, pour chaque position radiale $(x,y)$ une distance de reconstruction optimale $z_{j*}(x,y)$, telle que :

$$j* = argmax\left(C_j(x,y)\right).$$

Lorsqu'on considère $A_{z_{j'}}$ à une position radiale $(x,y)$, est nette lorsque l'indicateur de netteté est minimal, on obtient, pour chaque position radiale $(x,y)$ une distance de reconstruction optimale $z_{j*}(x,y)$, telle que :

$$j* = argmin\left(C_j(x,y)\right).$$

A l'issue de cette étape, on dispose d'une liste de positions tridimensionnelles $(x,y,z_{j*}(x,y))$, pour lesquelles on considère que l'observation de l'échantillon est nette.

Etape 150 : formation d'une image d'observation $I$ de l'échantillon.

Au cours de cette étape, on forme une image nette de l'échantillon, à partir de la pile d'images complexes, en considérant les positions tridimensionnelles $(x,y,z_{j*}(x,y))$ auxquelles une image complexe $A_{z_{j*}}$ est considérée comme nette.

L'image d'observation $I$ de l'échantillon peut être formée à partir du module des images complexes de la pile d'images. Dans ce cas, l'image d'observation de l'échantillon est telle que $I(x,y) = mod(A_{z_{j*}}(x,y))$. L'image d'observation $I$ de l'échantillon peut être formée à partir de la phase des images complexes de la pile d'images. Dans ce cas, l'image d'observation de l'échantillon est telle que $I(x,y) = arg(A_{z_{j*}}(x,y))$. L'image d'observation $I$ peut également être obtenue à partir de la partie réelle ou de la partie imaginaire des images complexes formant la pile d'images.

La figure 2C correspond à une image d'observation $I$ de l'échantillon, obtenue à partir d'une pile d'images complexes reconstruites sur la base de l'image acquise $I_0$ représentée sur la figure 2A. Certaines images élémentaires, obtenues à partir du module des images complexes formant la pile d'images complexes, sont représentées sur la figure 2D. L'image d'observation a été obtenue en considérant le module des images complexes formant la pile d'images complexes.

La figure 2C correspond à une mise en oeuvre de l'invention, tandis que la figure 2B correspond à l'art antérieur. On constate que l'invention permet une observation plus précise des particules constituant l'échantillon, bien que ces dernières soient dispersées spatialement, en particulier selon l'axe de propagation Z.

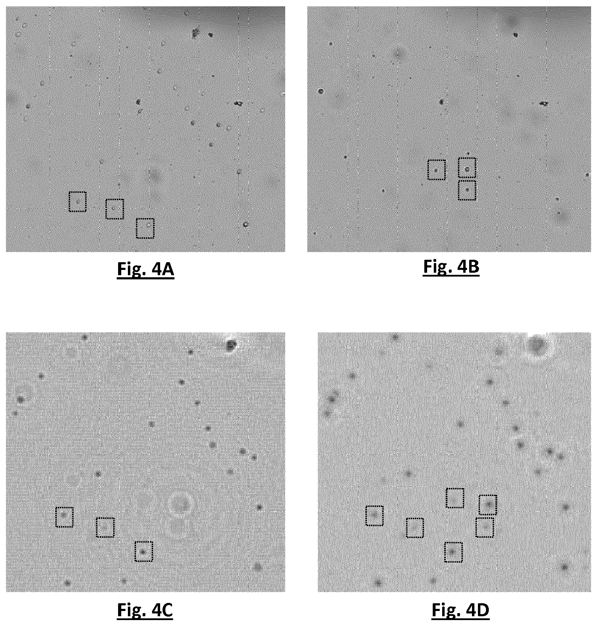

Les figures 4A et 4B sont des images d'un échantillon réalisées à l'aide d'un microscope, respectivement selon deux plans de focalisation différents. L'échantillon comporte des levures de type *Saccharomyces cerevisiae* baignant dans un milieu de culture "YPD" connu de l'homme du métier. Les levures apparaissant de façon nette sont encadrées. L'échantillon est maintenu dans une chambre fluidique d'épaisseur 250 μm. On a acquis une image $I_0$ de l'échantillon à l'aide d'un dispositif tel que représenté sur la figure 1A. La figure 4C correspond à une image élémentaire, correspondant au module d'une image complexe reconstruite à une distance de reconstruction correspondant au plan médian $P_{10}$ de l'échantillon. A partir de l'image complexe reconstruite au niveau du plan médian de l'échantillon, on a formé une pile d'images complexes, selon une plage de distances de reconstruction de -200 μm à + 200 μm à partir du plan médian de l'échantillon, avec un pas de 10 μm. La figure 4D correspond à une image d'observation $I$ de l'échantillon, obtenue en mettant en oeuvre l'invention, en considérant le module des images complexes de la pile d'images. On observe que :

- pour obtenir une observation correcte de l'échantillon au microscope, plusieurs images doivent être acquises, selon différents plans de focalisation ;
- la reconstruction selon l'art antérieur ne donne qu'une image partielle de l'échantillon, certaines particules étant mal représentées, en particulier les particules encadrées sur la figure 4B ;
- l'image d'observation $I$ selon l'invention permet, à partir d'une seule acquisition $I_0$, d'obtenir une représentation correcte des particules de l'échantillon, et cela quelle que soit leur distance vis-à-vis du capteur d'image 16 (cf. figure 4D);
- l'image d'observation $I$ permet, à partir d'une seule image, de pouvoir effectuer un comptage des particules observées, ou une détermination de leurs formes géométriques ou aspects respectifs. Il est également possible d'effectuer un dénombrement de particules en fonction de leurs formes.

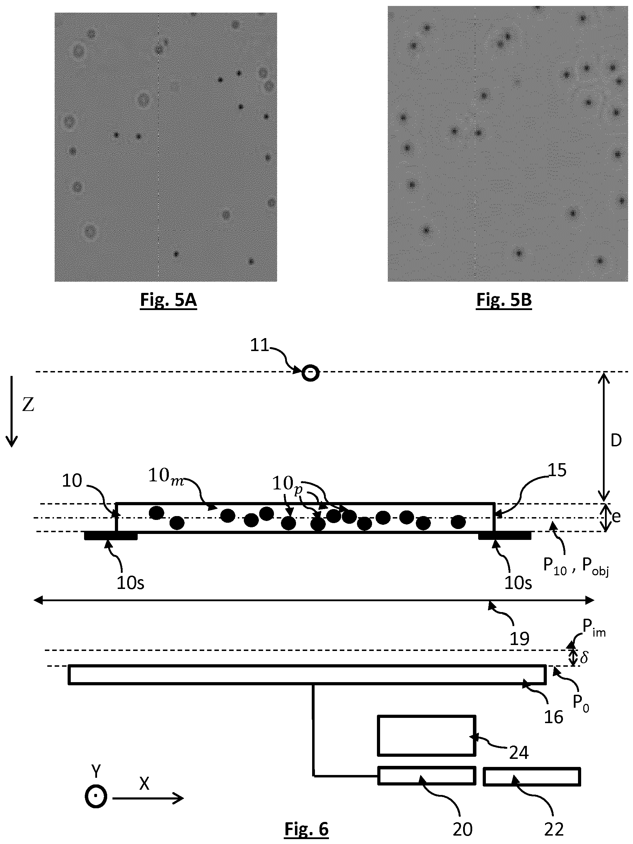

Les figures 5A et 5B ont été obtenues en utilisant un échantillon comportant des billes de PET (Polytéréphtalate d'éthylène) de diamètre 5 $\mu$m baignant dans de l'eau. On a acquis une image $I_0$ de l'échantillon à l'aide d'un dispositif tel que représenté sur la figure 1A. La figure 5A est à une image élémentaire obtenue en considérant le module d'une image complexe obtenue par reconstruction à partir de l'image acquise $I_0$ de l'échantillon, en considérant une distance de reconstruction correspondant au plan médian de l'échantillon. A partir de l'image complexe reconstruite au niveau du plan médian de l'échantillon, on a formé une pile d'images complexes, selon une plage de distances de reconstruction de - 400 $\mu$m à + 200 $\mu$m par rapport du plan médian de l'échantillon, avec un pas de reconstruction de 10 $\mu$m entre deux images reconstruites adjacentes. La figure 5B correspond à une image d'observation $I$ de l'échantillon, obtenue en mettant en oeuvre l'invention, en considérant le module des images complexes de la pile d'images. On observe que sur la figure 5A, certaines particules n'apparaissent pas nettement, du fait qu'elles sont éloignées de la distance de reconstruction considérée. Sur la figure 5B, toutes les particules apparaissent correctement, de façon à pouvoir les dénombrer ou estimer leur forme.

Selon un mode de réalisation, le procédé comporte une étape facultative 145, selon laquelle on effectue une sélection, pour chaque coordonnée radiale $(x,y)$ considérée, de la distance optimale $z_{j*}(x,y)$ obtenue suite aux étapes 130 et 140. Selon cette sélection, lorsque, pour une position radiale $(x,y)$, la distance optimale est située en dehors d'une plage de validité $\Delta z$ préalablement déterminée, elle est invalidée. La plage de validité $\Delta z$ correspond par exemple à une plage de distances $[z_{min}, z_{max}]$ délimitant l'échantillon. Ainsi, si $z_{j*}(x,y) \leq z_{min}$ ou $Z_{j*}(x,y) \geq z_{max}$, la distance optimale $z_{j*}(x,y)$ est invalidée. L'indicateur de netteté $C_j(x,y)$ correspondant à une telle distance est alors invalidé. Pour cette position radiale, les étapes 130 et 140 peuvent alors être réitérées. Un tel mode de réalisation permet d'éviter que des éléments situés hors de l'échantillon, par exemple des poussières disposées sur l'élément de maintien 15, ou sur le capteur d'image 16, soient considérés comme faisant partie de l'échantillon 10.

Selon un tel mode de réalisation, l'étape 150 est facultative. Dans ce cas, le procédé permet d'obtenir une distance optimale $z_{j*}$ à chaque position radiale considérée, sans forcément aboutir à une image d'observation de l'échantillon.

Selon une variante, une optique de formation d'image est disposée entre l'échantillon et le capteur d'image. Selon une variante, illustrée sur la figure 6, le dispositif comporte un système optique 19, définissant un plan objet $P_{obj}$ et un plan image $P_{im}$. Le capteur d'image 16 est alors disposé selon une configuration dite défocalisée, selon laquelle l'échantillon s'étend selon un plan décalé par rapport au plan objet, et/ou le capteur d'image s'étend selon un plan décalé par rapport au plan image. Par configuration défocalisée, on entend une configuration comportant un décalage de l'échantillon et/ou du capteur d'image par rapport à une configuration de mise au point, selon laquelle le plan de détection $P_0$ est conjugué d'un plan $P_{10}$ selon lequel s'étend l'échantillon. Le décalage $\delta$ est de préférence inférieur à 500 $\mu$m, voire à 200 $\mu$m. Il est de préférence supérieur à 10 $\mu$m ou 20 $\mu$m. De la même manière qu'en configuration sans lentille, une telle configuration permet l'obtention d'une image dans laquelle chaque microorganisme apparaît sous la forme d'une figure de diffraction, des interférences se produisant entre l'onde lumineuse émise par la source de lumière et se propageant jusqu'au capteur d'image et une onde de diffraction générée par chaque particule de l'échantillon. Dans l'exemple représenté sur la figure 6, le plan objet $P_{obj}$ est confondu avec un plan $P_{10}$ selon lequel s'étend l'échantillon et le plan image $P_{im}$ est décalé par rapport au plan de détection $P_0$. Le procédé décrit en lien avec les étapes 100 à 150 est applicable à des images acquises selon une telle configuration. Toutefois, une configuration en imagerie sans lentille est préférée, par le plus grand champ d'observation qu'elle procure.

L'invention peut être mise en oeuvre, de façon non limitative, dans le domaine du diagnostic, de la biologie, ou dans le contrôle de l'environnement, ou encore dans le domaine de l'agroalimentaire ou du contrôle de procédés industriels.

**Revendications**

1. Procédé d'observation d'un échantillon (10), comportant les étapes suivantes :

   a) illumination de l'échantillon à l'aide d'une source de lumière (11), la source de lumière émettant une onde lumineuse incidente (12) se propageant vers l'échantillon (10) selon un axe de propagation (Z) ;
   b) acquisition, à l'aide d'un capteur d'image (16), d'une image ($I_0$) de l'échantillon (10), formée dans un plan de détection ($P_0$), l'échantillon étant disposé entre la source de lumière (11) et le capteur d'image (16), chaque image étant représentative d'une onde lumineuse d'exposition (14), à laquelle est exposé le capteur d'image (16) sous l'effet de l'illumination, l'image comportant des pixels, chaque pixel correspondant à une position radiale $(x,y)$ définie dans un plan parallèle au plan de détection ;
   c) formation d'une pile d'images complexes, dites images reconstruites, à partir de l'image acquise ($I$) lors de l'étape b), chaque image reconstruite étant obtenue par l'application d'un opérateur de propagation numérique ($h$), selon une distance de reconstruction ($z_j$), le long de l'axe de propagation (Z), la pile d'images comportant autant d'images reconstruites ($A_{z_j}$) que de distances de reconstruction différentes, chaque image reconstruite ($A_{z_j}$) étant représentative d'une onde lumineuse d'exposition (14) à laquelle est exposé le capteur d'image (16) ;
d) à partir de chaque image ($A_{z_j}$) de la pile d'images, calcul d'un indicateur de netteté ($C_j(x,y)$) pour différentes positions radiales ($x,y$), chaque indicateur de netteté étant associé à une position radiale ($x,y$) et à une distance de reconstruction ($z_j$);
e) prise en compte d'un critère de sélection ;
f) pour chaque position radiale ($x,y$), et en fonction du critère de sélection, sélection d'un indicateur de netteté ($C_{j*}(x,y)$), parmi les différents indicateurs de netteté ($C_j(x,y)$) définis, à la position radiale ($x,y$), à partir des différentes images reconstruites ($A_{z_j}$), l'indicateur de netteté sélectionné ($C_{j*}(x,y)$) étant associé à une image reconstruite optimale ($A_{z_{j*}}$) pour la position radiale considérée;
g) formation d'une image d'observation ($I$) de l'échantillon, dont chaque pixel est associé à une position radiale ($x,y$), la valeur de pixels de l'image d'observation étant déterminée en fonction de la valeur, à la position radiale du pixel, de l'image reconstruite optimale ($A_{z_{j*}}$) qui lui est associée ;

le procédé étant **caractérisé en ce que** lors de l'étape d) :

- chaque indicateur de netteté ($C_j(x,y)$) est calculé à partir d'une image élémentaire ($I_{z_j}$), l'image élémentaire étant établie à partir du module et/ou de l'argument et/ou de la partie réelle et/ou de la partie imaginaire d'une image reconstruite ($A_{z_j}$) ;
- chaque indicateur de netteté est établi en considérant un gradient de l'image élémentaire ($I_{z_j}$) selon une ou plusieurs directions de gradient (X,Y).

2. Procédé selon la revendication 1, dans lequel l'étape d) comporte, pour chaque image reconstruite ($A_{z_j}$) de la pile d'images:

- un calcul d'une image de gradient ($G_X(I_{z_j}(x,y))$, $G_Y(I_{z_j}(x,y))$), représentative d'un gradient de l'image reconstruite ($A_{z_j}$) selon au moins une direction de gradient (X,Y);
- un calcul d'une norme de l'image de gradient ;

de telle sorte que l'indicateur de netteté ($C_j(x,y)$), en chaque position radiale ($x,y$), est obtenu à partir de la norme de l'image de gradient à la position radiale.

3. Procédé selon la revendication 2, dans lequel l'étape d) comporte :

- un calcul d'une image de gradient ($G_X(I_{z_j}(x,y))$, $G_Y(I_{z_j}(x,y))$) respectivement selon deux axes orthogonaux (X,Y) définissant un plan radial orthogonal à l'axe de propagation (Z) ;
- une combinaison de chaque image de gradient calculée de façon à former une image de gradient bidimensionnel ($G_{XY}$);

de telle sorte que chaque image de gradient bidimensionnel est représentative d'un gradient bidimensionnel d'une image complexe reconstruite $A_{z_j}$.

4. Procédé selon l'une quelconque des revendications précédentes, comportant, suite à l'étape f), une détermination, pour chaque position radiale ($x,y$) considérée, d'une distance optimale ($z_{j*}(x,y)$), correspondant à la distance de reconstruction de l'image reconstruite optimale ($A_{z_{j*}}$) associée à la position radiale.

5. Procédé selon l'une quelconque des revendications précédentes, dans lequel l'étape f) comporte une prise en compte d'une plage de validité ($\Delta z$), et un rejet d'un indicateur de netteté sélectionné ($C_{j*}(x,y)$) si la distance de reconstruction ($z_{j*}(x,y)$) qui lui est associée n'est pas comprise dans la plage de validité ($\Delta z$).

6. Procédé selon l'une quelconque des revendications précédentes, dans lequel lors de l'étape g), l'image d'observation, à chaque position radiale ($x,y$), est obtenue à partir de l'image reconstruite optimale ($A_{z_{j*}}$) pour la position radiale considérée.

7. Procédé selon l'une quelconque des revendications précédentes, dans lequel aucune optique de formation d'image n'est disposée entre l'échantillon et le capteur d'image.

8. Procédé selon l'une quelconque des revendications 1 à 6, dans lequel un système optique (19) est disposé entre l'échantillon et le capteur d'image, le système optique conjuguant un plan image ($P_{im}$) à un plan objet ($P_{obj}$), le plan de détection étant décalé par rapport au plan image, et/ou l'échantillon étant décalé du plan objet, de telle sorte que l'image acquise par le capteur d'image est une image défocalisée de l'échantillon (10).

9. Procédé selon l'une quelconque des revendications précédentes, dans lequel

10. Procédé selon l'une quelconque des revendications précédentes, dans lequel l'échantillon comporte des particules ($10_p$), le procédé comportant une étape h) de caractérisation des particules à partir de l'image d'observation ($I$) de l'échantillon, la caractérisation comprenant :

- un comptage des particules ;
- et/ou une détermination d'une taille et/ou d'une forme des particules ;
- et/ou un comptage de particules en fonction de leur taille et/ou de leur forme ;
- et/ou une détermination d'une position tridimensionnelle des particules.

11. Dispositif pour l'identification d'un échantillon, comportant :

- une source de lumière (11) configurée pour émettre une onde lumineuse incidente (12) se propageant vers l'échantillon (10) ;
- un capteur d'image (16) ;
- un support (10s), configuré pour maintenir l'échantillon (10) entre la source de lumière (11) et le capteur d'image (16) ;

un processeur (20), configuré pour recevoir une image ($I_0$) de l'échantillon acquise par le capteur d'image (16) et pour mettre en oeuvre les étapes c) à g) d'un procédé selon l'une quelconque des revendications 1 à 9.

12. Dispositif selon la revendication 11, dans lequel aucune optique de formation d'image n'est disposée entre l'échantillon (10) et le capteur d'image (16).

13. Dispositif selon la revendication 11, comportant un système optique (19) définissant une configuration de mise au point, selon laquelle le capteur d'image (16) est conjugué d'un plan passant par l'échantillon, le dispositif étant tel que le capteur d'image (16) ou l'échantillon (10) sont décalés par rapport à la configuration de mise au point, de telle sorte que lors de l'étape b), le capteur d'image (16) acquiert une image défocalisée de l'échantillon (10)

**Fig. 1A**

**Fig. 1B**

**Fig. 2A**             **Fig. 2B**             **Fig. 2C**

**Fig. 2D**

**Fig. 3**

**Fig. 4A**

**Fig. 4B**

**Fig. 4C**

**Fig. 4D**

**Fig. 5A**

**Fig. 5B**

**Fig. 6**

Europäisches
Patentamt

European
Patent Office

Office européen
des brevets

**RAPPORT DE RECHERCHE EUROPEENNE**

Numéro de la demande

EP 19 18 1164

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | XIAO YU ET AL: "Review of digital holographic microscopy for three-dimensional profiling and tracking", OPTICAL ENGINEERING., vol. 53, no. 11, 3 avril 2014 (2014-04-03), page 112306, XP055568267, BELLINGHAM ISSN: 0091-3286, DOI: 10.1117/1.OE.53.11.112306 * figures 1,2,4,9,13,19 * * alinéa [02.1] - alinéa [02.2] * * alinéas [03.1], [04.1], [4.3.2], [04.4] * ----- | 1-13 | INV. G01N15/14 G03H1/04 |
| X | EP 3 252 455 A1 (BIOMÉRIEUX [FR]; BIOASTER [FR]) 6 décembre 2017 (2017-12-06) * figures 1,3 * * revendication 1 * * alinéa [0001] * * alinéa [0053] - alinéa [0058] * * alinéa [0060] - alinéa [0062] * * alinéa [0064] - alinéa [0067] * * alinéa [0074] - alinéa [0078] * * alinéa [0081] - alinéa [0082] * * alinéa [0091] * ----- | 1-13 | |
| A | WO 2018/060619 A1 (COMMISSARIAT ENERGIE ATOMIQUE [FR]) 5 avril 2018 (2018-04-05) * page 26, ligne 8 - page 27, ligne 28 * ----- -/-- | 1-13 | |

DOMAINES TECHNIQUES RECHERCHES (IPC)

G01N
G03H

Le présent rapport a été établi pour toutes les revendications

| Lieu de la recherche | Date d'achèvement de la recherche | Examinateur |
|---|---|---|
| La Haye | 7 novembre 2019 | Lefortier, Stéphanie |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

page 1 de 2

Europäisches
Patentamt

European
Patent Office

Office européen
des brevets

**RAPPORT DE RECHERCHE EUROPEENNE**

Numéro de la demande

EP 19 18 1164

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | JACOB P FUGAL ET AL: "Practical methods for automated reconstruction and characterization of particles in digital in-line holograms; Practical methods for automated digital particle hologram analysis", MEASUREMENT SCIENCE AND TECHNOLOGY, IOP, BRISTOL, GB, vol. 20, no. 7, 21 mai 2009 (2009-05-21), page 75501, XP020160483, ISSN: 0957-0233 * figures 5,6 * * paragraphe 5 * | 1-13 | |
| A | ONUR MUDANYALI ET AL: "Detection of waterborne parasites using field-portable and cost-effective lensfree microscopy", LAB ON A CHIP, vol. 10, no. 18, 9 août 2010 (2010-08-09), page 2419, XP055121797, ISSN: 1473-0197, DOI: 10.1039/c004829a * "Appendix"; page 2422 - page 2423 * | 1-13 | **DOMAINES TECHNIQUES RECHERCHES (IPC)** |
| A,P | FR 3 061 297 A1 (COMMISSARIAT ENERGIE ATOMIQUE) 29 juin 2018 (2018-06-29) * page 10, ligne 22 - page 14, ligne 24 * * page 16, ligne 20 - page 19, ligne 7 * * page 22, ligne 29 - page 23, ligne 14 * * figure 1A * | 1-13 | |

Le présent rapport a été établi pour toutes les revendications

| Lieu de la recherche | Date d'achèvement de la recherche | Examinateur |
|---|---|---|
| La Haye | 7 novembre 2019 | Lefortier, Stéphanie |

EPO FORM 1503 03.82 (P04C02)

page 2 de 2

**EP 3 584 560 A1**

### ANNEXE AU RAPPORT DE RECHERCHE EUROPEENNE
### RELATIF A LA DEMANDE DE BREVET EUROPEEN NO.

EP 19 18 1164

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

07-11-2019

| Document brevet cité au rapport de recherche | | Date de publication | Membre(s) de la famille de brevet(s) | | Date de publication |
|---|---|---|---|---|---|
| EP 3252455 | A1 | 06-12-2017 | CN | 109154563 A | 04-01-2019 |
| | | | EP | 3252455 A1 | 06-12-2017 |
| | | | EP | 3465153 A1 | 10-04-2019 |
| | | | JP | 2019519761 A | 11-07-2019 |
| | | | US | 2019086866 A1 | 21-03-2019 |
| | | | WO | 2017207184 A1 | 07-12-2017 |
| WO 2018060619 | A1 | 05-04-2018 | EP | 3519899 A1 | 07-08-2019 |
| | | | FR | 3057068 A1 | 06-04-2018 |
| | | | WO | 2018060619 A1 | 05-04-2018 |
| FR 3061297 | A1 | 29-06-2018 | EP | 3343201 A1 | 04-07-2018 |
| | | | FR | 3061297 A1 | 29-06-2018 |
| | | | US | 2018189963 A1 | 05-07-2018 |

EPO FORM P0460

Pour tout renseignement concernant cette annexe : voir Journal Officiel de l'Office européen des brevets, No.12/82

**EP 3 584 560 A1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- WO 2016189257 A
- WO 2016151248 A
- WO 2017178723 A
- EP 3252455 A
- US 2017317125 A
- WO 2017162985 A

### Littérature non-brevet citée dans la description

- **XIAO YU et al.** Review of digital holographic microscopy for three-dimensional profiling and tracking. *Optical Enginerering,* vol. 53 (11